(19) Europäisches Patentamt
European Patent Office
Office européen des brevets

(11) EP 3 671 542 A1

(12) EUROPEAN PATENT APPLICATION

(43) Date of publication:
24.06.2020 Bulletin 2020/26

(51) Int Cl.:
$G06K\ 9/00^{(2006.01)}$ $G06K\ 9/62^{(2006.01)}$

(21) Application number: 19215698.2

(22) Date of filing: 12.12.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.12.2018 IN 201841047854

(71) Applicant: Visteon Global Technologies, Inc.
Van Buren Township, MI 48111 (US)

(72) Inventors:
• KOZONEK, Nora
76227 Karlsruhe (DE)

• ISMAIL, Asad
76227 Karlsruhe (DE)
• NARAYAN, Vikram
76227 Karlsruhe (DE)
• SCHULZE, Matthias
76227 Karlsruhe (DE)
• AMBADAS, Ganesh Adam
411018 Pune (IN)
• CHOUGULE, Shriyash
411018 Pune (IN)

(74) Representative: MERH-IP Matias Erny Reichl
Hoffmann
Patentanwälte PartG mbB
Paul-Heyse-Strasse 29
80336 München (DE)

(54) **METHOD FOR MULTILANE DETECTION USING A CONVOLUTIONAL NEURAL NETWORK**

(57) A method for detecting and classifying two or more lane boundaries defining lanes on a road an ego-vehicle is driving or positioned on comprises a step of inputting an image of the road; a step of applying a convolutional neural network which has been trained for detecting lanes and classifying each detected lanes into one of at least two lane classes, wherein the lane classes describe whether the lane is a left or right boundary of a lane; and a step of outputting a plurality of discrete points for each lane class.

Fig. 2

EP 3 671 542 A1

**Description**

TECHNICAL FIELD

One or more embodiments described herein relate to a method for detecting and classifying two or more lane boundaries defining lanes on that a road an ego-vehicle may be driving or positioned on. In particular, a method is provided which can reliably detect lane boundaries and classify the detected lane boundaries by using a convolutional neural network.

BACKGROUND

Advanced Driver Assistance Systems (ADAS) are being rapidly adopted in vehicles. Autonomous navigation may be a desired functionality among the driver assistance functions offered by ADAS, which in turn is highly dependent on reliable and accurate lane detection. Information related to the ego lane (the lane where the ego vehicle is currently driving on) and side lanes (the lanes on the left and/or on the right of the ego lane) is also crucial for other driving assistance tasks such as lane keeping, lane departure warning, and overtaking assistance.

BRIEF SUMMARY OF THE INVENTION

Aspects of the present application are directed at providing a method for reliable multilane detection using a CNN which is fast and accurate. In the following description, the term "coordinate network" is used to refer to a convolutional neural network (CNN) according to embodiments.

According to an aspect, a method for detecting and classifying two or more lane boundaries defining lanes on a road an ego-vehicle may be driving or positioned on is provided. In other words the method may detect a lane boundary and determine what class of lane boundary has been detected. In particular, it is determined whether the lane boundary is a left or right boundary of the lane with respect to the ego-vehicle.

According to an aspect, the method comprises a step of inputting an image of the road. The image may be obtained by at least one imaging device of an ego-vehicle. Sensors such as cameras, LiDARs or radars may be used to detect objects around the ego-vehicle as well as road surface markings defining lane boundaries of a road the ego-vehicle is travelling on. The detection and tracking of road boundaries and/or lane boundaries is an important task for advanced driver assistance systems (ADAS) as many functions such as lane departure warning, lane keeping assistance, lane change warning systems, etc. depend on a correct representation of the lanes.

According to an aspect, the method comprises a step of applying a convolutional neural network which has been trained for detecting lanes and classifying each detected lanes into one of at least two lane classes, wherein the lane classes describe whether the lane is a left or right boundary of a lane, wherein the directions left and right relate to the position of the ego-vehicle on the ego-lane. In other words, in the simplest case only the left and the right lane boundary defining the ego-lane is detected. The detected lane boundaries are then classified into the two lane classes "left ego lane boundary" and "right ego lane boundary".

According to an aspect, the method comprises a step of outputting a plurality of discrete points for each lane class. In other words, a series of points along the lane boundary is output. In particular, the points are separated from each other such that they points are distributed over the captured road image. The separation of the discrete points may be accordingto a predetermined distance in a direction along the road or in a vertical direction of the image, for example, a minimum amount of pixels in a vertical direction may be defined. Similarly, for detecting and classifying the lanes, a minimum distance along a horizontal direction of the image, i.e. along the width of the road, may be defined. This minimum distance in horizontal direction may be dependent on a distance to a lower edge of the image in order to account for perspective.

According to an aspect, the convolutional neural network comprises a plurality of sections, each section comprising at least two convolution layers. For example, five sections may be provided.

According to an aspect, each section of the convolutional neural network comprises a max pooling layer. The max pooling layer may provide the maximum value from each of a cluster of neurons of the convolutional layers comprised in the section.

According to an aspect, the max pooling layer is excluded for the last section. Since the output of the last section is used in the subsequent fully connected layers, max pooling is not required in the last section.

According to an aspect, the convolutional neural network further comprises at least two fully-connected layers for each lane class. In other words, for each lane boundary, two dedicated fully-connected layers are provided back-to-back for deriving the plurality of coordinates related to the discrete points defining the lanes.

According to an aspect, the detected lanes include at least a left boundary and a right boundary of an ego-lane defining the lane the ego-vehicle is driving on. According to another aspect, further lanes may be detected by detecting and classifying the lane boundaries of side lanes next to the ego-lane.

According to an aspect, the detected lanes include at least one further lane boundary of a side lane left or right of the ego-lane. For example, two lanes may be detected: the ego-lane, which is the lane that the ego-vehicle is currently driving on, and a lane next to the ego lane, i.e. either the left side lane or the right side lane. Depending on the road class (i.e. multilane highway, two-laned county road, city roads), a road may have one or more lanes for one or more directions. In general, the method may be adapted to always detect and classify three lanes by detecting and classifying four lane boundaries. In case less than three lanes are present, it may be detected that side lanes are not present.

According to an aspect, for each detected lane at least ten discrete points are output, wherein each point is defined by at least two coordinates in terms of pixel values of the input image.

According to an aspect, the convolutional neural network does not comprise a decoder or post-processing steps. By eliminating decoder and/or post-processor, the method according to an aspect may be processed in much less time than convention methods for lane detection while at the same time being robust and achieving a high detection and classification accuracy.

According to an aspect, there is provided an information processing device for detecting and classifying two or more lane boundaries defining lanes on a road an ego-vehicle is driving on. The information processing device may be provided in a vehicle, for example as part of an Advanced Driver Assistance Systems (ADAS) and work in conjunction with, for example, a navigation system, a lane keeping assistant, an autonomous driving system, a lane departure warning, and/ or an overtaking assistance.

According to an aspect, the information processing device comprises at least one input unit for receiving input images of the road. According to an aspect, the input image may be received from one or more road sensors observing the road surface for detecting lane boundaries, such as one or more cameras, for example front facing perspective cameras, side-facing fisheye cameras, a LiDAR sensor, and/or a radar sensor. In particular, the lane boundary on the right side of the ego-vehicle with respect to the direction of travel may be detected in case of right-hand traffic. In the case of left-hand traffic, the lane boundary on the left side of the ego-vehicle with respect to the direction of travel may be detected.

According to an aspect, the information processing device comprises at least one processing unit. The processing unit may comprise one or more CPUs and/or one or more GPUs. Furthermore, the processing unit may comprise RAM.

According to an aspect, the information processing device comprises a storage unit storing instructions causing the processing unit to execute a method according an aspect described herein.

One or more embodiments described herein differ from known methods in at least two ways. Firstly, unlike previously used networks which have a complex structure (from a training perspective) and specialized message passing connections, networks used in one or more embodiments have a relatively simple structure consisting of known layer operations. The change of paradigm from segmentation to regression may give a significant performance improvement to such a network. Secondly, no post processing is needed to infer lane information since the network may be trained in an end-to-end way.

The method according to at least one aspect described, not only needs less processing time, it may also achieve higher accuracy at detecting and classifying lanes of a road in real-world conditions.

BRIEF DESCRIPTION OF THE DRAWINGS

Fig. 1 shows an example of an input image (a), the corresponding ground truth (b), a segmentation mask generated by ENet (c) exhibiting fragmentation issues, and a segmentation mask generated by FCN (d) exhibiting splattering issues.

Fig. 2 illustrates the coordinate network output consisting of four lane vectors corresponding to four boundary types, each containing fifteen discrete points along the predicted lane boundary.

Fig. 3 illustrates the structure of the coordinate network comprising several convolution layers and branching into fully-connected layers.

Fig. 4 illustrates the layers of the coordinate network of Fig. 3 in more detail.

Fig. 5 illustrates the difference between the coordinate network using the regression approach and conventional network architectures using a segmentation approach with encoder and decoder layers.

Fig. 6 shows an example image of the TuSimple dataset in (a), a derived dataset used for training of a coordinate network according to an embodiment in (b), a derived dataset for training of segmentation networks (LaneNet and UNet) in (c), and a derived dataset for analyzing lane detection abilities of segmentation networks (ENet and FCN) in (d).

Fig. 7 illustrates the metrics used for evaluating segmentation networks and the coordinate network.

Fig. 8 shows a comparison of the performance of different networks, wherein Fig. 8(a) shows input images, Fig. 8(b) shows the ground truth, Fig. 8(c) shows the output of UNet, Fig. 8(d) shows the output of LaneNet, and Fig 8(e) shows the output of the coordinate network according to the embodiment, wherein the curves have been fitted to the coordinates.

## DETAILED DESCRIPTION OF THE INVENTION

Camera sensors have been used extensively for lane detection task, and have been a preferred low cost solution over costly LiDAR sensors. However, a cost-effective, vision based approach incurs a lot of challenges in extracting lane features from varying driving and imaging conditions. Low light condition during dawn and dusk, and reduced visibility in bad weather directly affects the lane detection accuracy. Road surfaces may vary in appearance due to, for example, construction material used, tire markings, and because of shadows casted by vehicles, neighboring trees, bridges, and/or other structures, making the detection of lane boundaries more error prone. Also the presence of informative road markings may increase chances of false detection and/or classification. Occlusion of lane markings due to vehicles is a common situation which adds to the challenge of inferring lane boundaries. For example, lane markings may be completely occluded in heavy traffic conditions. The challenge gets further amplified for side lane detection as their visual signatures may be weaker, for example due to the road geometry ahead.

Known lane detection methods may employ traditional computer vision techniques where hand-crafted features are designed by an arduous process of fine tuning. Such specialized features work under a controlled environment but are not robust enough for complex real-world driving scenarios, hence not suitable for practical deployment. A computer vision approach using a convolutional neural network (CNN), has the potential to provide a more reliable and more accurate solution to lane detection. Though impressive in their performance, recent CNN based segmentation methods require post processing and model fitting operations to obtain final lane predictions. Thus, the known CNN methods require a high computational effort and may be relatively slow.

The robustness of traditional lane detection techniques directly depends on reliable feature extraction procedures from the input road scene. Inverse perspective mapping (IPM) technique is often used as a primary operation in lane detection. For example, a steerable filter has been applied on equally spaced horizontal bands in the IPM of input frames to extract lane marking features. Accuracy of approaches using IPM can be lowered due to false positives introduced by vehicles present in the scene. A method for detecting vehicles ahead in the scene may use a support vector machine (SVM) classifier. Using this vehicle presence information may add robustness to the approach.

Furthermore, data from multiple sensors may be combined to improve detection accuracy. Vision-based multilane detection systems may also combine GPS information and map data. A feature derived from fusion of LiDAR and vision data statistics may be used to detect curb locations along the road. This curb information may be further used for lane detection with the help of thresholding (Otsu's method), morphological operation (TopHat) and PPHT (Progressive Probabilistic Hough Transform). Another usual approach to produce robustness against noisy feature measurements may use a detection and tracking framework like particle and Kalman filtering. An ego lane detection method may use multiple particle filters to detect and track lane boundary locations. Such a superparticle approach may track lane boundary points by propagating particles in a bottom-up direction of input frames, independently for left and right ego lane boundaries. An energy efficient method known as Lanquest can detect the ego-vehicle's position on the lane using inertial sensors in a smartphone. However, this method cannot be used to identify road turnings ahead.

Recent approaches incorporating CNNs for detecting lane boundaries have proven to be more robust than model based methods. A CNN used as a preprocessing step in a lane detection system may help enhancing edge information by noise suppression. A method known as DeepLanes detects immediate sideward lane markings with a laterally mounted camera system. Although DeepLanes may achieve real time performance with high accuracy, it cannot detect road turnings ahead. Another multilane detection method makes use of CNN and regression to identify line segments that approximate a lane boundary effectively. However, this method may require high resolution images as an input in order to work properly. Using high resolution images may hamper the speed. Another method known as LaneNet is an instance segmentation network which makes use of a branched structure to output a binary lane segmentation mask and pixel localization mask, which are further used to infer lane instance by clustering process.

A convolutional neural network (CNN) is a class of deep neural networks, most commonly applied to analyzing visual imagery such as images of a road captured by image capturing devices of an ego-vehicle driving on the road. CNNs use a variation of multilayer perceptrons designed to require minimal preprocessing. They are also known as shift invariant or space invariant artificial neural networks, based on their shared-weights architecture and translation invariance characteristics.

Convolutional networks were inspired by biological processes in that the connectivity pattern between neurons resembles the organization of the animal visual cortex. Individual cortical neurons respond to stimuli only in a restricted region of the visual field known as the receptive field. The receptive fields of different neurons partially overlap such that they cover the entire visual field.

CNNs use relatively little pre-processing compared to other image classification algorithms. This means that the network learns the filters that in traditional algorithms were hand-engineered. This independence from prior knowledge and human effort in feature design is a major advantage. CNNs have applications in image and video recognition as described herein with regard to recognition of road lanes by detecting and classifying lane boundaries (i.e. the continuous or broken road surface marking used for separating road lanes).

A CNN comprises an input and an output layer, as well as multiple hidden layers. The hidden layers of a CNN typically consist of convolutional layers, pooling layers, fully connected layers and normalization layers. Description of the process as a convolution in neural networks is by convention. Mathematically it is a cross-correlation rather than a convolution (although cross-correlation is a related operation). This only has significance for the indices in the matrix, and thus which weights are placed at which index.

Convolutional layers apply a convolution operation to the input, passing the result to the next layer. The convolution emulates the response of an individual neuron to visual stimuli. Each convolutional neuron processes data only for its receptive field. Although fully connected feedforward neural networks can be used to learn features as well as classify data, it is not practical to apply this architecture to images. A very high number of neurons would be necessary, even in a shallow (opposite of deep) architecture, due to the very large input sizes associated with images, where each pixel is a relevant variable. For instance, a fully connected layer for a (small) image of size 100x100 has 10000 weights for each neuron in the second layer. The convolution operation brings a solution to this problem as it reduces the number of free parameters, allowing the network to be deeper with fewer parameters. For instance, regardless of image size, tiling regions of size 5x5, each with the same shared weights, requires only 25 learnable parameters. In this way, it resolves the vanishing or exploding gradients problem in training traditional multi-layer neural networks with many layers by using backpropagation.

Convolutional networks may include local or global pooling layers, which combine the outputs of neuron clusters at one layer into a single neuron in the next layer. For example, max pooling uses the maximum value from each of a cluster of neurons at the prior layer. Fully connected layers connect every neuron in one layer to every neuron in another layer. It is in principle the same as the traditional multi-layer perceptron neural network (MLP).

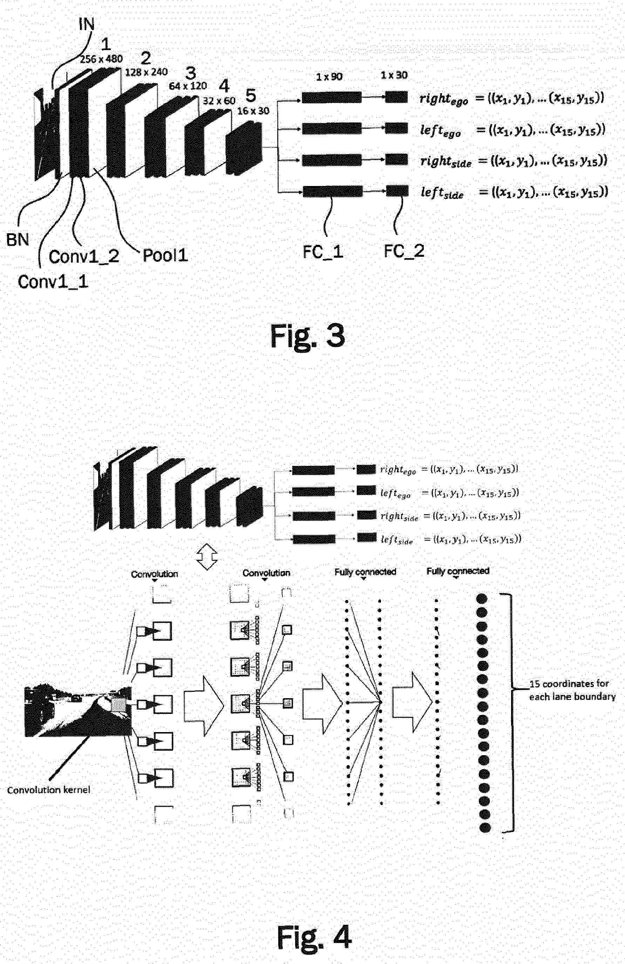

In neural networks, each neuron receives input from some number of locations in the previous layer. In a fully connected layer, each neuron receives input from every element of the previous layer. In a convolutional layer, neurons receive input from only a restricted subarea of the previous layer. Typically the subarea is of a square shape (e.g., size 5x5). The input area of a neuron is called its receptive field. So, in a fully connected layer, the receptive field is the entire previous layer. In a convolutional layer, the receptive area is smaller than the entire previous layer. This difference between convolutional layers and fully connected layers is apparent for example in Fig. 4 showing the structure of a coordinate network according to an embodiment.

Each neuron in a neural network computes an output value by applying some function to the input values coming from the receptive field in the previous layer. The function that is applied to the input values is specified by a vector of weights and a bias (typically real numbers). Learning in a neural network progresses by making incremental adjustments to the biases and weights. The vector of weights and the bias are called a filter and represents some feature of the input (e.g., a particular shape). A distinguishing feature of CNNs is that many neurons share the same filter. This reduces memory footprint because a single bias and a single vector of weights is used across all receptive fields sharing that filter, rather than each receptive field having its own bias and vector of weights.

A CNN architecture is formed by a stack of distinct layers that transform the input volume into an output volume (e.g. holding the class scores) through a differentiable function. A few distinct types of layers are commonly used. The convolutional layer is the core building block of a CNN. The layer's parameters consist of a set of learnable filters (or kernels), which have a small receptive field, but extend through the full depth of the input volume. During the forward pass, each filter is convolved across the width and height of the input volume, computing the dot product between the entries of the filter and the input and producing a 2-dimensional activation map of that filter. As a result, the network learns filters that activate when it detects some specific type of feature at some spatial position in the input. Stacking the activation maps for all filters along the depth dimension forms the full output volume of the convolution layer. Every entry in the output volume can thus also be interpreted as an output of a neuron that looks at a small region in the input and shares parameters with neurons in the same activation map.

When dealing with high-dimensional inputs such as images, it is impractical to connect neurons to all neurons in the previous volume because such a network architecture does not take the spatial structure of the data into account. Convolutional networks exploit spatially local correlation by enforcing a sparse local connectivity pattern between neurons of adjacent layers: each neuron is connected to only a small region of the input volume. The extent of this connectivity is a hyperparameter called the receptive field of the neuron. The connections are local in space (along width and height), but always extend along the entire depth of the input volume. Such an architecture ensures that the learnt filters produce the strongest response to a spatially local input pattern.

Three hyperparameters control the size of the output volume of the convolutional layer: the depth, stride and zero-padding. The depth of the output volume controls the number of neurons in a layer that connect to the same region of the input volume. These neurons learn to activate for different features in the input. For example, if the first convolutional layer takes the raw image as input, then different neurons along the depth dimension may activate in the presence of various oriented edges, or blobs of color. Stride controls how depth columns around the spatial dimensions (width and height) are allocated. When the stride is 1 then we move the filters one pixel at a time. This leads to heavily overlapping receptive fields between the columns, and also to large output volumes. When the stride is 2 then the filters jump 2 pixels at a time as they slide around. Similarly, for any integer $S>0$ a stride of S causes the filter to be translated by S units at a time per output. In practice, stride lengths of $S \geq 3$ are rare. The receptive fields overlap less and the resulting output volume has smaller spatial dimensions when stride length is increased. Sometimes it is convenient to pad the input with zeros on the border of the input volume. The size of this padding is a third hyperparameter. Padding provides control of the output volume spatial size. In particular, sometimes it is desirable to exactly preserve the spatial size of the input volume.

Another important concept of CNNs is pooling, which is a form of non-linear down-sampling. There are several non-linear functions to implement pooling among which max pooling is the most common. It partitions the input image into a set of non-overlapping rectangles and, for each such sub-region, outputs the maximum.

Intuitively, the exact location of a feature is less important than its rough location relative to other features. This is the idea behind the use of pooling in convolutional neural networks. The pooling layer serves to progressively reduce the spatial size of the representation, to reduce the number of parameters, memory footprint and amount of computation in the network, and hence to also control overfitting. It is common to periodically insert a pooling layer between successive convolutional layers in a CNN architecture. The pooling operation provides another form of translation invariance.

The pooling layer operates independently on every depth slice of the input and resizes it spatially. The most common form is a pooling layer with filters of size $2 \times 2$ applied with a stride of 2 downsamples at every depth slice in the input by 2 along both width and height, discarding 75% of the activations. In this case, every max operation is over 4 numbers. The depth dimension remains unchanged.

Finally, after several convolutional and max pooling layers, the high-level reasoning in the neural network is done via fully connected layers. Neurons in a fully connected layer have connections to all activations in the previous layer, as seen in regular (non-convolutional) artificial neural networks. Their activations can thus be computed as an affine transformation, with matrix multiplication followed by a bias offset (vector addition of a learned or fixed bias term).

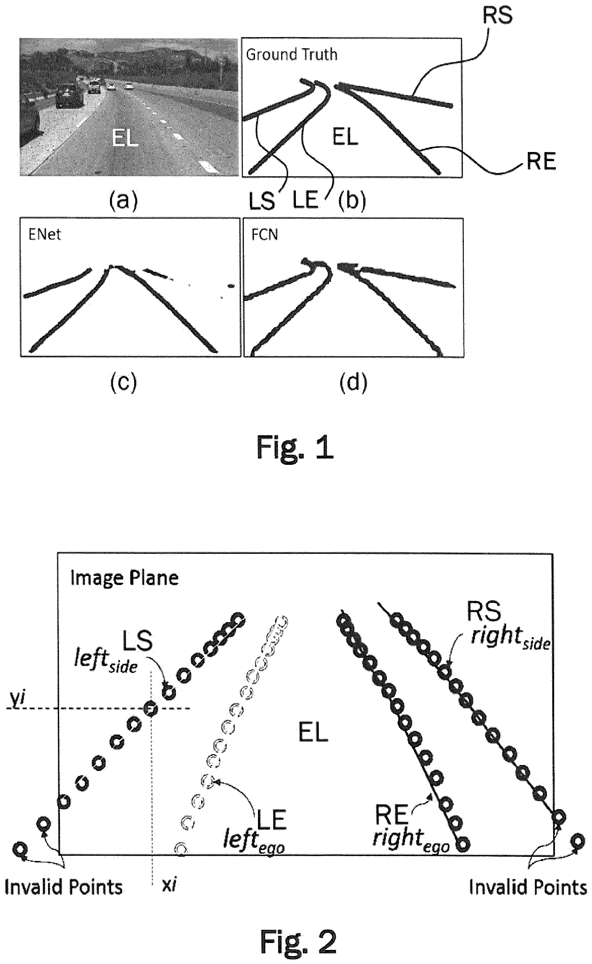

In the following an embodiment of a coordinate network will be described with reference to the appended figures. Fig. 1(a) shows an example of an input image of a road scene on a highway with multiple lanes. The goal of the coordinate network is to detect the lane boundaries of the ego lane, i.e. the lane that the ego vehicle is driving on and of the lanes left and right of the ego lane. Fig. 1(b) shows the ground truth corresponding to the input image of Fig. 1(a). The ground truth may be fitted manually for example. In Fig. 1(b), the four lane boundaries are labelled LS for the left boundary of the left side lane, LE for the left boundary of the ego-lane, RE for the right boundary of the ego-lane, and RS for the right boundary of the right side lane. Accordingly, the right boundary RE of the ego-lane is at the same time also the left boundary of the right side lane. Similarly, the left boundary LE of the ego-lane is at the same time also the right boundary of the left side lane. A segmentation mask generated by ENet exhibiting fragmentation issues is depicted in Fig. 1(c). A segmentation mask generated by FCN exhibiting splattering issues is shown in Fig. 1(d).

Although recent CNN semantic segmentation approaches have been proven to be effective, they may still be inefficient in detecting lane boundaries. Semantic segmentation networks carry out multiclass classification for each pixel of the input image, thereby producing a dense pixel mask as output. Thus the segmentation paradigm may be too exacting in nature as the emphasis is on obtaining accurate classification per pixel, instead of identifying a shape. Moreover the lane boundaries appear as thin and elongated shapes in the road scene, unlike cars and pedestrian which appear blob shaped. A small loss in segmentation accuracy can significantly degrade the segmentation mask of lane boundaries, rendering them fragmented and splattered as illustrated in Fig. 1(c) and (d). FCN in Fig. 1 refers to Fully Conventional Network and ENet in Fig. 1(d) refers to Efficient Neural Network. Additional post processing operations like model fitting and tracking are needed in such cases in order to infer lane boundaries from these noisy segmentation lane masks.

In order to overcome the issues of known methods, the lane detection problem is posed as a CNN regression task. A coordinate network is proposed which outputs parameterized lane boundaries in terms of image coordinates, i.e. by providing a set of discrete points for each of a plurality of lane boundaries. Unlike the segmentation approach, this new approach may be less computationally demanding as it does not rely on each pixel getting classified correctly. Moreover, this approach does not require any post processing stage.

For implementing the regression approach for lane detection and classification, a CNN model has been developed which outputs a lane coordinate vector for each lane boundary representing the predicted positions of the lane boundaries in the given road scene. The detected lane boundaries shall always include the left and right lane markings of the ego lane. These two lane boundaries defining the ego lane will be referred to as $right_{ego}$ and $left_{ego}$. Furthermore, the lanes on left and/or right side of the ego lane may be detected. Accordingly, the lane boundaries $left_{side}$ and/or $right_{side}$ may be detected.

Fig. 2 illustrates an example of the four lane vectors. In the example, each lane vector contains fifteen points. A lane vector can also contain more or less than fifteen points, for example between five and twenty points. The amount of points may be chosen in order to obtain a good trade-off between speed and accuracy of the network.

The four lane coordinate vectors depicted in Fig. 2 correspond to four lane boundary types (classes), i.e. $right_{ego}$, $left_{ego}$, $right_{side}$ and $left_{side}$. As in Fig. 1. these lane boundary types are also labelled RE, LE, RS, and LS. A single lane coordinate vector consist of a plurality of points defined by coordinates (x,y) on the image plane, representing the sampled locations of the lane boundary. In the example depicted in Fig. 2, each lane vector comprises fifteen points. Some of the predicted points may lie outside the image plane and may be treated as invalid points.

Usual structures of semantic segmentation networks consist of an encoder, followed by a decoder which expands the feature map to a denser segmentation map. Unlike usual segmentation networks, the structure of a network according to embodiments only has an encoder followed by four (in the case of three lanes havingfour lane boundaries) bifurcating branches of fully connected layers FC_1 and FC_2 which is illustrated in Fig. 3. Each of the four branches outputs a lane coordinate vector corresponding to one of the lane boundary types as described above with reference to Fig 2.

**Table 1:** Network description

| Layer Name Type | Kernel | Stride | Padding |
|---|---|---|---|
| Conv1_1 | (3x3) | (1x1) | 1 |
| Conv1_2 | (3x3) | (1x1) | 1 |
| Pool1 | (2x2) | (2x2) | 1 |
| Repeat above sequence for encoder sections 2, 3, and 4 | | | |
| Conv5_1 | (3x3) | (1x1) | 1 |
| Conv5_2 | (3x3) | (1x1) | 1 |
| Structure of a single branch | | | |
| FC_1 | fully connected layer outputs a vector of 90 features | - | - |
| FC_2 | fully connected layer outputs a vector of 30 features | - | - |

The structure of the network is illustrated in Fig. 3. The encoder operates on an input with a resolution of, for example 256x480, wherein 256 is the height of the image in pixels and 480 is the width of the image in pixels. To this input a first batch normalization layer BN may by applied, the batch normalization layer BN having the same resolution as the input, for example 256x480[IA(1]. The encoder comprises five sections which are labelled 1, 2, 3, 4, and 5 in Fig. 3. Each section comprises two convolutional layers. In section 1 the two convolutional layers Conv1_1, Conv1_2 are followed by a max pooling layer Pool1. Sections 2 to 4 have a similar structure of three layers each with two convolutional layers and a max pooling layer. Section 5 only has the convolutional layers Conv5_1 and Conv5_2. Two fully connected layers are added back-to-back for each lane type (class), giving the network a branched structure. Such a branched arrangement minimizes misclassifications of predicted lane points (coordinates). The network details are summarized in Table 1.

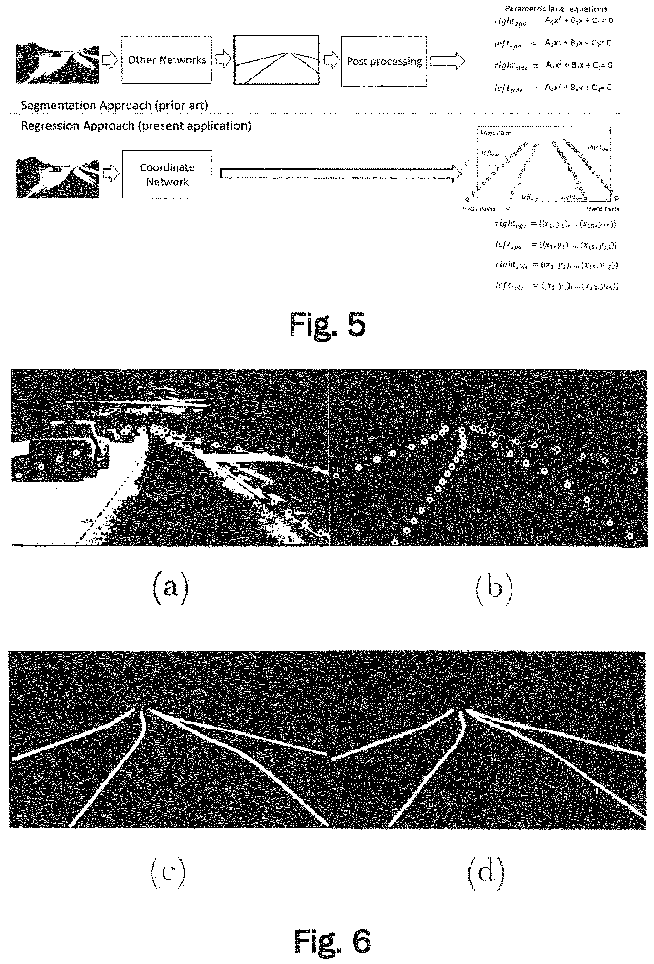

Fig. 4 shows a more detailed illustration of the structure of the network. Fig. 5 illustrates the difference between the network according to an embodiment and a usual semantic segmentation network having encoder and decoder layers including image post processing. By eliminating the post processing state, the network according to embodiments may reduce the amount of required computations and therefore improve efficiency and decrease the computational load. The resulting network may also reduce the amount of time needed to detect multi lane boundaries. Furthermore, the output of the network are parametric lanes in terms of image coordinates. Such a format may be very conveniently handled by any subsequent operations and/or functions of an ADAS. The conventional structure on the other hand outputs parametric lane equations which may be provided for example as polynomials. Such equations are much more difficult to obtain and more difficult to handle by subsequent functions.

Training of the network for lane detection and classification may be performed using a dataset derived from the TuSimple dataset published for the lane detection challenge. The challenge dataset comprises 3626 images of highway driving scenes, along with their corresponding lane annotations. These images have a resolution of 720x1280 and are recorded in medium to good weather conditions during daytime. The lane annotation information comprises a list of the column position (index) for the lane boundaries corresponding to a fixed row positions (indexes). An example image from the TuSimple dataset is illustrated in Fig. 6(a). On average there are four lanes annotated per image, marking the left and right ego lane boundaries and the left and right side lane boundaries. Lanes which are occluded by vehicles, or cannot be seen because of abrasion are also retained.

The TuSimple dataset does not distinguish between the lane boundary type i.e. $ego_{right}$, $ego_{left}$, $side_{right}$ and $side_{left}$. Thus, a dataset has been derived which has the lane boundary positions as well as lane type information (see Fig 6(b)) and has images of 256x480 resolution. In order to compare the approach according to the embodiment with a conventional segmentation approach, semantic segmentation networks have been trained and evaluated for the task of lane detection and classification as well. A second dataset for semantic segmentation task has been derived by fitting curves over the lane points (coordinates) from the derived dataset of the coordinate network (see Fig 6(c)). All the curves drawn in the ground truth images are of 8 pixels in thickness. As shown in Fig. 6(d), a third dataset has been derived which contains the lane positional information for analyzing the segmentation capability of ENet and FCN (Fig. 1). In Fig. 6, the four lanes correspond to the four lane classes labeled LS, LE, RE, and RS in Fig. 1.

As the number of images in the lane detection challenge dataset is too low to effectively train the CNN variants, data augmentation and transfer learning strategies have been adopted to improve the learning result. Data augmentation is a technique to synthetically extend a given dataset by applying different image processing operations. Effective application of data augmentation can increase the size of a training set ten-fold or more. Additionally, data augmentation adds immunity against over-fitting of the network. To extend the derived dataset to 11196 images, operations like cropping, mirroring, adding noise, and rotating the images around varying degrees have been used. A similar procedure has been followed for augmenting all the derived datasets, and for generating test dataset from TuSimple test images. During transfer learning the weights of the encoder section of UNet, trained on Cityscape Dataset, have been borrowed. Later the network according to the embodiment has been fine-tuned with the derived dataset. During network training, a stochastic gradient descent (SGD) optimizer with a learning rate of 0.001 has been used. The batch size was kept to one and training was done for 75 epochs. The following L1 loss function has been used as a metric to measure the quality of the output coordinates:

$$Loss = \sum_{i=1}^{15}|xp_i - xg_i| \sum_{i=1}^{15}|yp_i - yg_i|,\text{[IA(2)]}$$

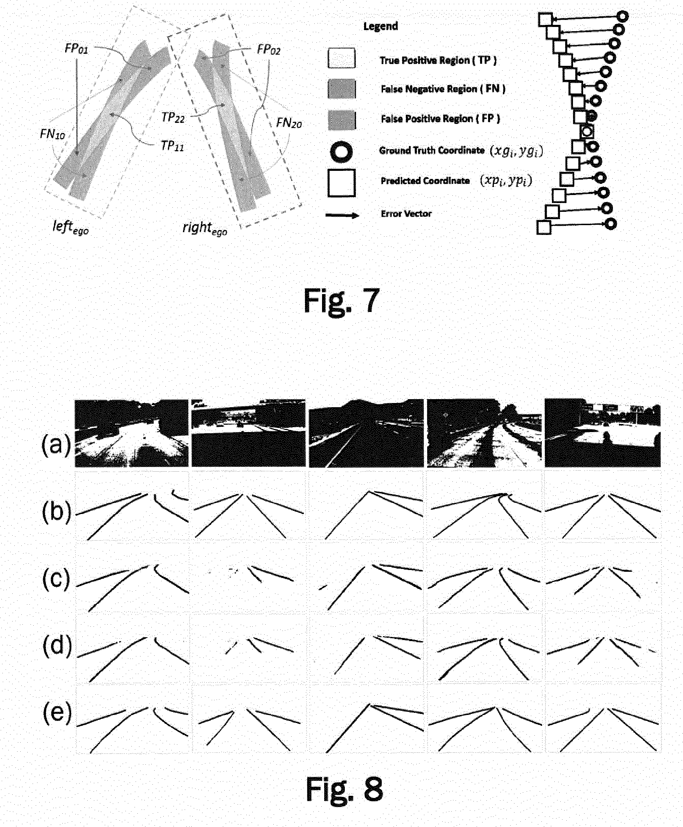

wherein $(xp_i, yp_i)$ are the lane coordinates predicted by the network and $(xg_i, yg_i)$ are the correspond-fitting ground truth coordinates. An illustration of the metric is depicted in Fig. 7 and compared to the metric for evaluating segmentation networks.

A reason for choosing the L1 loss function over a quadratic L2 loss function, more commonly known as Euclidian loss, is that the L1 norm may be more robust and may not introduce any drift as may be introduced by the L2 norm. On the other hand, using the L1 norm as the loss function may be somewhat unstable such that a careful selection of the hyperparameters is very important in order to make the learning of the network converge.

The hyperparameters including training method, batch size, learning rate, and number of epochs may be varied for optimized training of the network. For example, it has been found that the training was most efficient for batch size of one, two, or three. A larger batch size may decrease the training time. However, since the L1 norm measures the absolute difference between predicted coordinates and a respective ground truth point, a batch size larger than 3 may make it difficult for the network to learn lane boundary points which occupy an area that corresponds to less than 1% of image. [IA(3)]Furthermore, the learning rate was found to be between 0.0008 and 0.005. The number of epochs, i.e. the number of iterations through the entire dataset, was found to be optimal between 50 and 80. More iterations may lead to overlearning, thereby making the network too specific for the training data. The most suitable optimizer was found to be the stochastic gradient descent (SGD) optimizer. Other optimizer methods for training may include momentum, NAG, Adagrad, Adadelta, and Rmsprop.

The coordinate network according to the embodiment has been devised to be an improvement over recent lane detection approaches which primarily perform semantic segmentation. Hence in order to compare the coordinate network, LaneNet has been chosen as an example of a segmentation network developed as a lane detection and classification solution for comparison. LaneNet makes use of a discriminative loss function which gives it a performance edge over semantic segmentation networks. Since the weights the network's encoder section according to the embodiment are borrowed from UNet (trained on CityScape dataset), UNet has been chosen as a second network for comparison. UNet and LaneNet have been trained as five-class semantic segmentation networks using the derived segmentation dataset with IoU (Intersection over Union) and discriminative loss functions, respectively. The four lane boundaries are identified by four distinct classes, and the background forms a fifth class.

Most common metrics for evaluating segmentation accuracy are based on similarity measures between predicted pixels and ground truth pixels. The performance of the coordinate network according to the embodiment cannot be directly compared with segmentation networks such as LaneNet and UNet because the coordinate network outputs image coordinates $(xp_i, yp_i)$ rather than a dense pixel-wise prediction. In order to compare the performance of the coordinate network to the performance of LaneNet and UNet, the output of the coordinate network may be adapted. For example, a lane segmentation image (mask) may be generated by fitting a curve to the predicated lane coordinates. The drawn lanes may have a width which is consistent with the lane width used when generating the ground truth images of the derived segmentation dataset. The predictions of all the networks may then be compared to the ground truth in the test dataset using a MIoU (Mean Intersection over Union) metric. The MIoU metric for a single test image is defined as:

$$MIoU = \frac{1}{1+k}\sum_{i=0}^{k}\frac{TP_{ii}}{\sum_{j=0}^{k}FN_{ij}+\sum_{j=0}^{k}FP_{ji}-TP_{ii}},$$

where k is number of classes (here k=5, i.e. $right_{ego}$, $left_{ego}$, $right_{side}$, $left_{side}$, and background). TP, FN and FP are pixel counts of true positive, false negative, and false positive regions, respectively as illustrated in Fig. 7.

Table 2: Lane detection accuracy measured using the MIoU metric.

| Network | MIoU |
|---|---|
| UNet (Semantic Segmentation) | 64.5 |
| LaneNet (Instance Segmentation) | 65.7 |
| **Coordinate Network (Regression)** | **67.2** |

The different networks have been evaluated using test images. The respective performances have been summarized in Table 2. Although LaneNet demonstrate better accuracy (MIoU) over UNet, the coordinate network outperforms LaneNet as can be seen from the Table 2. As the CNN regression approach seems most promising both in visual examination and in terms of MIoU metric, we investigate the coordinate network more thoroughly. In Table 3, we summarize the performance of coordinate network on the four lane types. We compute the mean error between predicted lane coordinates with the corresponding ground truth values as a Euclidean distance (in terms of pixels), for each lane type and over entire test dataset. The mean prediction error for single lane boundary class is defined as

$$Mean\ Prediction\ Error = \frac{1}{15}\sum_{i=1}^{15}\sqrt{(xp_i - xg_i)^2 + (yp_i - yg_i)^2}$$

where $(xp_i, yp_i)$ are the predicted lane coordinates, and $(xg_i, yg_i)$ are the corresponding ground truth coordinates. From the prediction error statistics listed in Table 3 it can be observed that the mean prediction error is relatively low for ego lane boundaries as compared to side lane boundaries. Particularly for side lane boundaries, the count of missed lanes, i.e. lanes that were present in the ground truth but were completely missed-out by the network, have been recorded. Similarly the count of "Over-predicted" lanes has been denoted as those lanes that were predicted by the network but were not present in the ground truth. From Table 3, it can be observed that the missed lane count is low compared to the falsely predicted side lane boundaries. Also it can be observed that the mean error values for ego lane boundaries are within the thickness of ground truth lane boundary (i.e. eight pixels), justifying the improved MIoU metric.

**Table 3:** Prediction error statistics in terms of pixels computed for 256x480 image resolution.

| Lane Type | Mean Prediction Error [pixels] | Maximum [pixels] | Minimum [pixels] | Missed Lanes | Over-Predicted Lanes |
|---|---|---|---|---|---|
| $right_{ego}$ | 6.05 | 30 | 0.61 | - | - |
| $left_{ego}$ | 6.54 | 32.05 | 0.95 | - | - |
| $right_{side}$ | 8.99 | 100.4 | 1.38 | 1 | 3 |
| $left_{side}$ | 9.94 | 94.26 | 1.13 | 2 | 7 |

In order to visually compare the output of the coordinate network with the segmentation networks, curves have been fitted and plotted to the predicted lane image coordinates. Predictions of all the networks have been obtained on driving scenarios including occlusions due to vehicles, poorly marked roads, and high contrast illuminations due to shadows from bridges over the road. I has been verified that the coordinate model is more reliable in detecting and classifying multiple lanes when compared to other networks. Particularly UNet and LaneNetfail in detecting lane boundaries in high contrast images arising in scenarios of an under pass, and also perform poorly due to occlusions from vehicles. Moreover, it has been observed that UNet and LaneNet tend to confuse lane boundary types for lane markings which are away from the camera. Such errors may manifest as broken lane boundaries in the predicted segmentation mask. The coordinate according to the embodiment network on the other hand has a superior detection accuracy in occlusions, and particularly in scenarios where shadows are cast by bridges over the road. A comparison of the performance of the different networks is illustrated in Fig. 8, wherein Fig. 8(a) shows example input images, Fig. 8(b) shows the corresponding ground truth, Fig. 8(c) shows the output of UNet, Fig. 8(d) shows the output of LaneNet, and Fig 8(e) shows the output of the coordinate network according to the embodiment, wherein the curves have been fitted to the coordinates. In each image of Fig. 8(b) to (e), four lanes are visible, sometimes only partially due to insufficient detection by the network. The four lanes always correspond to the four lane classes LS, LE, RE, and RS as labeled in Figs. 1 and 2.

The presented CNN based regression network, i.e. the coordinate network according to the embodiment, may reliably detect multiple lanes as well as classifying them based on the position, where the coordinate network produces parameterized lane information in terms of image coordinates. Unlike recent CNN segmentation based methods which produce dense pixel masks, the regression approach removes the stringent criterion of classifying each pixel correctly. Thereby the detection accuracy of both the ego lane and side lane boundaries can be improved. The output of the coordinate network represents a convenient format which enables training of the network in an end-to-end fashion, thus eliminating any need of post-processing operations. It has been established that the coordinate network may perform better than LaneNet and UNet during evaluation, particularly in high contrast scenes where shadows from bridges are cast over the road (see for example the second and fifth image of Fig. 8(a)) and in situations where lane markings are occluded by vehicles. Moreover, the coordinate network may perform better in identifying distant lane markings, which are often misclassified by segmentation based methods. The coordinate network has been validated using a test vehicle under usual highway driving conditions, where a consistent and stable detection and classification of lane boundaries has been observed without employing any tracking operation. The coordinate network may be implemented on an image processing device such as Nvidia's PX2 platform, where it may achieve a performance of 25 fps.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. Method for detecting and classifying two or more lane boundaries defining lanes of a road an ego-vehicle is driving or positioned on, the method comprising:

   Inputting an image of the road;
   applying a convolutional neural network which has been trained for detecting lanes and classifying each detected lanes into one of at least two lane classes, wherein the lane classes describe whether the lane is a left (LE, LS) or right boundary (RE, RS) of a lane; and
   outputting a plurality of discrete points for each lane class (LS, LE, RE, RS).

2. Method according to claim 1, wherein the convolutional neural network comprises a plurality of sections, each section comprising at least two convolution layers.

3. Method according to claim 1 or 2, wherein each section of the convolutional neural network comprises a max pooling layer.

4. Method according to claim 3, wherein the max pooling layer is excluded for the last section.

5. Method according to at least one of the preceding claims, wherein the convolutional neural network further comprises at least two fully-connected layers for each lane class (LS, LE, RE, RS).

6. Method according to at least one of the preceding claims, wherein the detected lanes include at least a left boundary and a right boundary of an ego-lane defining the lane the ego-vehicle is driving on.

7. Method according to claim 6, wherein the detected lanes include at least one further lane boundary of a side lane left or right of the ego-lane.

8. Method according to at least one of the preceding claims, wherein for each detected lane at least ten discrete points are output, wherein each point is defined by at least two coordinates in terms of pixel values of the input image.

9. Method according to at least one of the preceding claims, wherein the convolutional neural network does not comprise a decoder or post-processing steps.

10. Method according to at least one of the preceding claims, wherein the method further comprises training the convolutional neural network using the L1 loss function

$$Loss = \sum_{i=1}^{15} |xp_i - xg_i| \sum_{i=1}^{15} |yp_i - yg_i|.$$

11. Method claim 10, wherein the hyperparameters used for training the convolutional neural network include a batch size between 1 and 3, a learning rate between 0.0008 and 0.005, a number of epochs between 50 and 80, and the stochastic gradient descent (SGD) optimizer

12. Information processing device for detecting and classifying two or more lane boundaries defining lanes on a road an ego-vehicle is driving on, the information processing device comprising:

at least one input unit for receiving input images of the road;
a processing unit; and
a storage unit storing instructions causing the processing unit to execute a method according to at least one of claims 1 to 11.

Fig. 1

Fig. 2

IN

1
256 x 480

2
128 x 240

3
64 x 120

4
32 x 60

5
16 x 30

1 x 90

1 x 30

$right_{ego} = ((x_1, y_1), ... (x_{15}, y_{15}))$

$left_{ego} = ((x_1, y_1), ... (x_{15}, y_{15}))$

$right_{side} = ((x_1, y_1), ... (x_{15}, y_{15}))$

$left_{side} = ((x_1, y_1), ... (x_{15}, y_{15}))$

BN

Conv1_2    Pool1

Conv1_1

FC_1    FC_2

## Fig. 3

$right_{ego} = ((x_1, y_1), ... (x_{15}, y_{15}))$

$left_{ego} = ((x_1, y_1), ... (x_{15}, y_{15}))$

$right_{side} = ((x_1, y_1), ... (x_{15}, y_{15}))$

$left_{side} = ((x_1, y_1), ... (x_{15}, y_{15}))$

Convolution    Convolution    Fully connected    Fully connected

Convolution kernel

15 coordinates for
each lane boundary

## Fig. 4

Parametric lane equations

$$right_{ego} = A_1x^2 + B_1x + C_1 = 0$$

$$left_{ego} = A_2x^2 + B_2x + C_2 = 0$$

$$right_{side} = A_3x^2 + B_3x + C_3 = 0$$

$$left_{side} = A_4x^2 + B_4x + C_4 = 0$$

Segmentation Approach (prior art)

Regression Approach (present application)

$$right_{ego} = \{(x_1, y_1), \dots (x_{15}, y_{15})\}$$

$$left_{ego} = \{(x_1, y_1), \dots (x_{15}, y_{15})\}$$

$$right_{side} = \{(x_1, y_1), \dots (x_{15}, y_{15})\}$$

$$left_{side} = \{(x_1, y_1), \dots (x_{15}, y_{15})\}$$

## Fig. 5

(a)

(b)

(c)

(d)

## Fig. 6

14

Fig. 7

Fig. 8

Europäisches
Patentamt

European
Patent Office

Office européen
des brevets

# EUROPEAN SEARCH REPORT

Application Number

EP 19 21 5698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Shriyash Chougule ET AL: "Reliable Multilane Detection and Classification by Utilizing CNN as a Regression Network : Munich, Germany, September 8-14, 2018, Proceedings, Part V" In: "12th European Conference on Computer Vision, ECCV 2012", 8 September 2018 (2018-09-08), Springer Berlin Heidelberg, Berlin, Heidelberg 031559, XP055665490, ISSN: 0302-9743 ISBN: 978-3-540-78138-7 vol. 11133, pages 740-752, DOI: 10.1007/978-3-030-11021-5_46, * figures 3,4 * * abstract * | 1-12 | INV. G06K9/00 G06K9/62 |
| A | JOHN VIJAY ET AL: "Real-Time Lane Estimation Using Deep Features and Extra Trees Regression", 4 February 2016 (2016-02-04), 12TH EUROPEAN CONFERENCE ON COMPUTER VISION, ECCV 2012; [LECTURE NOTES IN COMPUTER SCIENCE], SPRINGER BERLIN HEIDELBERG, BERLIN, HEIDELBERG, PAGE(S) 721 - 733, XP047534923, ISSN: 0302-9743 ISBN: 978-3-642-10648-4 [retrieved on 2016-02-04] * the whole document * | 1-12 | |
| A | EP 2 924 614 A1 (TOYOTA MOTOR CO LTD [JP]) 30 September 2015 (2015-09-30) * the whole document * | 1-12 | TECHNICAL FIELDS SEARCHED (IPC) G06K |

The present search report has been drawn up for all claims

| Place of search | Date of completion of the search | Examiner |
|---|---|---|
| The Hague | 3 April 2020 | Mitzel, Dennis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 5698

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2020

| Patent document cited in search report | | Publication date | Patent family member(s) | | Publication date |
|---|---|---|---|---|---|
| EP 2924614 | A1 | 30-09-2015 | CN | 104951744 A | 30-09-2015 |
| | | | EP | 2924614 A1 | 30-09-2015 |
| | | | JP | 6185418 B2 | 23-08-2017 |
| | | | JP | 2015191372 A | 02-11-2015 |
| | | | US | 2015278613 A1 | 01-10-2015 |

EPO FORM P0459

For more details about this annex : see Official Journal of the European Patent Office, No. 12/82